# EUROPEAN PATENT SPECIFICATION

(11) **EP 4 391 121 B1**
(45) Date of publication and mention of the grant of the patent: **24.12.2025**
(21) Application number: 23755916.6
(22) Date of filing: 21.02.2023
(51) Int. Cl.: B62B 5/04, H01M 6/00, B23Q 3/18, H01M 10/04

(54) **POSITIONING DEVICE OF MOVING DEVICE AND BATTERY PRODUCTION LINE**
POSITIONIERUNGSVORRICHTUNG EINER BEWEGLICHEN VORRICHTUNG UND BATTERIEPRODUKTIONSLINIE
DISPOSITIF DE POSITIONNEMENT DE DISPOSITIF MOBILE ET LIGNE DE PRODUCTION DE BATTERIE

(30) Priority: 21.02.2022 CN 202220350694 U
(43) Date of publication of application: 26.06.2024
(73) Proprietor: Contemporary Amperex Technology (Hong Kong) Limited, Central, Central And Western District (HK)
(72) Inventor: HUANG, Hua, Ningde, Fujian 352100 (CN); CHEN, Fanke, Ningde, Fujian 352100 (CN); SUN, Zhiqiang, Ningde, Fujian 352100 (CN); LI, Yang, Ningde, Fujian 352100 (CN); LI, Yang, Ningde, Fujian 352100 (CN)
(74) Representative: Gong, Jinping
(86) International application number: PCT/CN2023/077337
(87) International publication number: WO 2023/155916

(56) References cited:
- AT-B- 276 231
- CN-A- 103 144 932
- CN-A- 105 632 987
- CN-A- 112 736 748
- CN-U- 203 089 481
- CN-U- 210 212 116
- CN-U- 210 212 116
- CN-U- 216 859 037
- JP-A- 2001 046 118
- US-A1- 2007 114 764

## Description

### Cross-Reference to Related Application

The present application claims the priority of Chinese Patent Application No. 202220350694.1 filed on February 21, 2022 and entitled "POSITIONING APPARATUS FOR MOBILE APPARATUS AND BATTERY PRODUCTION LINE".

### Technical Field

Embodiments of the present application relate to the field of machineries, and more particularly, to a positioning apparatus for a mobile apparatus as specified in any of claims 1-8 and a battery production line as specified in claim 9.

### Background

In the field of machineries, a positioning apparatus is an important component that can implement positioning of a mobile apparatus. CN210212116U mentions a locking assembly. CN103144932A relates to a workpiece loading conveying device. AT276231B relates to a feeder carriage for a cleaning device.

Currently, in related technologies, various types of positioning apparatuses are provided to adapt to different scenario requirements. Some of the positioning apparatuses involve electrical control and have complex mechanical structures, resulting in high manufacturing costs. Therefore, how to provide a low-cost positioning apparatus that is capable of achieving reliable positioning of a mobile apparatus is a technical problem to be solved.

### Summary of the Invention

The present invention is defined by the appended claims. The present application provides a positioning apparatus for a mobile apparatus and a battery production line. The positioning apparatus for a mobile apparatus is capable of reliably positioning the mobile apparatus and has a low cost.

In a first aspect, a positioning apparatus for a mobile apparatus is provided, and is used for non-manually fixing the mobile apparatus at a preset place. The positioning apparatus includes: a locking rod arranged on the mobile apparatus, the locking rod forming an accommodating region; a bracket arranged at the preset place; and a locking block arranged on the bracket and having a first end that is capable of moving vertically in a gravity direction; wherein the locking block is configured such that when the mobile apparatus moves toward the bracket in a horizontal direction, the first end of the locking block is pushed by the locking rod to move upward, and when the locking rod moves to a preset position, the first end of the locking block falls into the accommodating region of the locking rod under the action of gravity to lock the locking rod; wherein the locking block is an eccentric structure. An eccentric hole is formed in a region where a second end of the locking block is located. An eccentric shaft is arranged in the eccentric hole. The region where the second end of the locking block is located is connected to the bracket through the eccentric shaft, wherein the second end of the locking block is the other end opposite to the first end of the locking block.

Through the technical solutions of the embodiments of the present application, the structure of the positioning apparatus for a mobile apparatus is relatively simple, and the movement of the mobile apparatus and the effect of gravity can be used to achieve reliable locking and positioning of the mobile apparatus. While the positioning apparatus has high positioning reliability, its manufacturing cost and installation and maintenance cost are both low.

Through the technical solution of the embodiment, the locking block is designed as the eccentric structure, so that the locking block has a first end capable of moving flexibly. Therefore, the first end is capable of being sensitively pushed by the locking rod, thereby improving the operating sensitivity of the positioning apparatus.

**In** some possible embodiments, the positioning apparatus further includes: a fixing groove, the fixing groove is fixed on one side of the bracket facing the mobile apparatus; the locking block is arranged on the fixing groove and connected to the bracket through the fixing groove; the region where the second end of the locking block is located is located in the fixing groove and connected to the fixing groove through the eccentric shaft.

Through the technical solution of the embodiment, while the region where the second end of the locking block is located is connected to the fixing groove through the eccentric shaft, a wall of the fixing groove can protect and limit the locking block to prevent external factors from affecting the locking block and prevent the locking block from being displaced, thereby improving the use reliability of the locking block.

**In** some possible embodiments, the locking block has a first surface facing the locking rod between the second end and the first end of the locking block, the first surface is a plane, and the locking block is configured such that when the locking rod moves in a horizontal direction toward the bracket, the first surface is in sliding contact with the locking rod.

Through the technical solution of the embodiment, the first surface of the locking block is designed to be adapted to the locking rod, so that the first end of the locking block is capable of being smoothly pushed by the locking rod, thereby achieving the locking effect to ensure the use reliability of the positioning apparatus and improve the user experience.

In some possible embodiments, the region where the first end of the locking block is located has a second surface connected to the first surface, the second surface is a plane, and the second surface and the first surface form an included angle; the locking block is configured such that when the locking rod moves to a preset position, the second surface is closer to the accommodating region than the first surface in the gravity direction.

Through the technical solution of the embodiment, after the first end of the locking block falls into the accommodating region of the locking rod, the second surface is closer to the accommodating region than the first surface in the gravity direction, so that the second surface is easier to contact with the accommodating region, thereby increasing a contact area between the locking block and the locking rod, so as to increase the locking reliability of the locking block to the locking rod, and improve the positioning performance of the positioning apparatus.

In some possible embodiments, the locking rod has a first end in an axial direction, and the first end is provided with a slope; the locking rod is configured such that when moving toward the bracket in the horizontal direction, the slope on the first end of the locking rod contacts with the locking block to push the first end of the locking block to move upward in the gravity direction.

Through the technical solution of the embodiment, the first end of the locking rod is provided with the slope to contact with the first surface of the locking block. On the one hand, it can avoid sharp edges and corners in the locking rod from causing damage to the locking block, and improve the use life of the positioning apparatus, and on the other hand, it can also increase the area between the locking rod and the locking block so that the locking rod is capable of effectively pushing the locking block.

In some possible embodiments, the accommodating region is arranged at an end of the locking rod close to the bracket.

Through the technical solution of the embodiment, an end portion of the locking rod close to the bracket can be fully utilized to achieve the purpose of pushing the locking block and accommodating the first end of the locking block. Moreover, through the technical solution of the embodiment, the horizontal space required by the entire positioning apparatus can also be reduced.

In some possible embodiments, the locking rod is configured to rotate around a central axis of the locking rod, and the accommodating region is formed with an opening in the rotation direction of the locking rod; the locking block is configured such that when the locking rod rotates, the first end of the locking block is moved out of the accommodating region through the opening to unlock the locking rod.

Through the technical solution of the embodiment, the first end of the locking block can be moved out of the accommodating region of the locking rod by rotating the locking rod, thereby realizing unlocking between the locking rod and the locking block. Therefore, the unlocking method is relatively simple and easy to implement, and does not bring too much additional cost to the positioning apparatus.

In some possible embodiments, the positioning apparatus further includes: an operating apparatus arranged on the bracket and configured to perform a preset operation on the mobile apparatus according to a positional relationship between the locking rod and the locking block.

Through the technical solution of the embodiment, in addition to being used for non-manually fixing the mobile apparatus, the positioning apparatus is also capable of realizing a non-manual preset operation on the mobile apparatus through the operating apparatus.

In some possible embodiments, the positioning apparatus further includes a sensing member and a sensor; the sensing member is connected to the locking block, and the sensing member is capable of moving along with the locking block; the sensor is arranged on the operating apparatus, and the sensor is configured to sense the sensing member reaching a preset region, so as to determine that the first end of the locking block falls into the accommodating region of the locking rod, so that the operating apparatus performs the preset operation on the mobile apparatus.

Through the technical solution of the embodiment, the sensing member and the sensor are arranged in the positioning apparatus, and through the cooperation of the two, a locking state of the mobile apparatus is monitored. When the sensor determines that the locking block falls into the accommodating region of the locking rod, the mobile apparatus is locked and positioned. At this time, the operating apparatus performs the preset operation on the mobile apparatus to ensure the smooth progress of the preset operation.

In some possible embodiments, the sensor is electrically connected to the operating apparatus. When the sensor senses that the sensing member reaches the preset region, the operating apparatus is configured to convey a material at the preset place to the mobile apparatus, and/or convey a material from the mobile apparatus to the preset place.

Through the technical solution of the embodiment, when the sensor senses that the sensing member reaches the preset region, the mobile apparatus is locked and positioned at the preset place, and the operating apparatus is capable of realizing material conveying between the preset place and the mobile apparatus, thereby realizing an automatic material conveying function.

In some possible embodiments, the bracket is a door frame-type bracket.

Through the technical solution of the embodiment, the bracket is designed as a door frame structure, which has high stability and is easy to install.

In some possible embodiments, the mobile apparatus is a transport vehicle.

Through the technical solution of the embodiment mode, the transport vehicle is relatively simple to implement, is capable of moving flexibly, and can be applied to a variety of scenarios.

In some possible embodiments, the transport vehicle further includes: a guide mechanism, and the guide mechanism is used for guiding the transport vehicle to move toward the bracket in the horizontal direction.

Through the technical solution of the embodiment, the guide mechanism in the transport vehicle is capable of guiding the transport vehicle to approach and reach the bracket more accurately in the horizontal direction, thereby enabling the locking block on the bracket to lock the locking rod on the mobile apparatus.

In a second aspect, a battery production line is provided, including the positioning apparatus for a mobile apparatus as described in the first aspect or any possible embodiment of the first aspect.

Through the technical solutions of the embodiments of the present application, the structure of the positioning apparatus for a mobile apparatus on the battery production line is relatively simple, and the movement of the mobile apparatus and the effect of gravity can be used to achieve reliable locking and positioning of the mobile apparatus. While the positioning apparatus has high positioning reliability, its manufacturing cost and installation and maintenance cost are both low.

### Description of Drawings

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
Fig. 1 is a schematic structural diagram of a production line disclosed in an embodiment of the present application;
Fig. 2 is a schematic structural diagram of a positioning apparatus for a mobile apparatus disclosed in an embodiment of the present application;
Fig. 3 is a partial schematic enlarged diagram of a part A in Fig. 2;
Fig. 4 is a schematic structural diagram of a positioning apparatus for a mobile apparatus disclosed in another embodiment of the present application;
Fig. 5 is a partial schematic enlarged diagram of a part B in Fig. 4;
Fig. 6 is a schematic diagram of a locking rod in sliding contact with a first surface of a locking block disclosed in an embodiment of the present application;
Fig. 7 is a schematic diagram of a locking block falling into an accommodating region of a locking rod after the locking rod reaches a preset position disclosed in an embodiment of the present application;
Fig. 8 is a partial schematic structural diagram of a positioning apparatus for a mobile apparatus disclosed in an embodiment of the present application;
Fig. 9 is a schematic structural diagram of a locking rod disclosed in an embodiment of the present application;
Fig. 10 is a partial schematic structural diagram of a positioning apparatus for a mobile apparatus disclosed in another embodiment of the present application;
Fig. 11 is a schematic structural diagram of a mobile apparatus disclosed in an embodiment of the present application; and
Fig. 12 is a schematic structural diagram of a mobile apparatus and a bracket disclosed in an embodiment of the present application.

In the accompanying drawings, the figures are not necessarily drawn to scale.

### Detailed Description

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the applied specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," and the like in the specification and claims of the present application or in the accompany drawings above are used to distinguish different objects, not to describe a particular sequence or primary-secondary relationship.

Reference to "an embodiment" in the present application means that a particular feature, structure, or characteristic described in connection with the embodiment can be included in at least one embodiment of the present application. The appearance of this phrase in various places in the Specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

The present application relates to a positioning apparatus for a mobile apparatus, and the positioning apparatus is capable of locking and positioning the mobile apparatus in a fixed position.

As an illustrative application scenario, the positioning apparatus of the mobile apparatus in the present application can be applied to a production line. The mobile apparatus may be an apparatus that moves between different devices on the production line. For example, the mobile apparatus may be a transport vehicle used for transporting a material that needs to be transferred on the production line. The mobile apparatus is capable of being positioned on the production line through the positioning apparatus, so that the mobile apparatus is in a stationary state to facilitate smooth transportation of a relevant material on the production line to the mobile apparatus.

Of course, in addition to the production line, the positioning apparatus for a mobile apparatus provided in the present application can also be used in other scenarios. The specific usage scenario is not limited in the embodiments of the present application.

In some embodiments, the positioning apparatus for a mobile apparatus is a complex mechanical structure controlled by a circuit. For example, the positioning apparatus includes a plurality of cylinder mechanisms, and movements of the cylinder mechanisms are controlled by a circuit to achieve a locking function of the mobile apparatus.

In the embodiment, the positioning apparatus includes a control circuit. When the control circuit fails, the positioning apparatus cannot achieve the locking function, and therefore, the reliability of the positioning apparatus is low. In addition, the complex mechanical structure and its control circuit may also result in high manufacturing cost and installation and maintenance cost for the positioning apparatus.

In view of this, the present application provides a positioning apparatus for a mobile apparatus, and the positioning apparatus includes a locking block and a locking rod that are capable of cooperating with each other. The locking block has a first end that is capable of moving vertically in the gravity direction, and the locking rod is arranged on the mobile apparatus. When the mobile apparatus moves, the locking rod on the mobile apparatus can push the first end of the locking block to move upward. When the mobile apparatus moves to a preset position, the first end of the locking block falls into an accommodating region of the locking rod under the action of gravity, so as to lock and position the mobile apparatus.

Through the technical solution, the structure of the positioning apparatus for a mobile apparatus is relatively simple, and the movement of the mobile apparatus and the effect of gravity can be used to achieve reliable locking and positioning of the mobile apparatus. While the positioning apparatus has high positioning reliability, its manufacturing cost and installation and maintenance cost are both low.

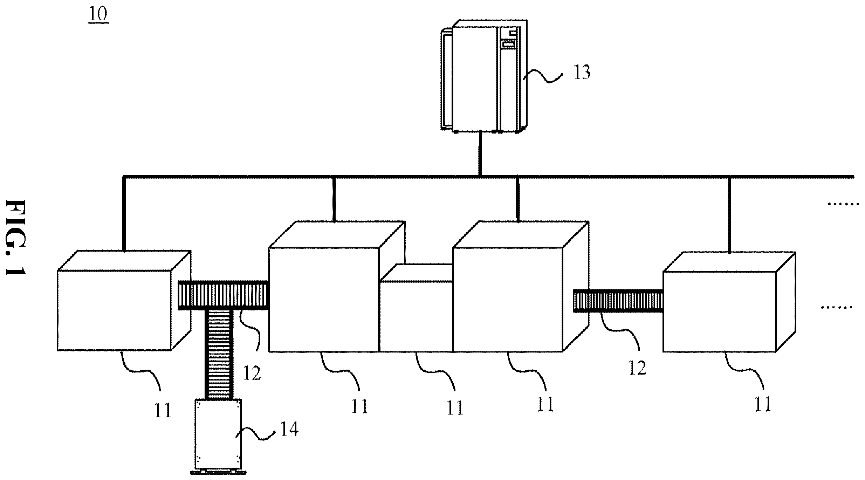

Fig. 1 is a schematic structural diagram of a production line 10 to which the present application is capable of being adapted.

As shown in Fig. 1, the production line 10 includes: a plurality of devices 11. According to production requirements of the production line 10, the plurality of devices 11 are devices of different types and functions. For example, when the production line 10 is a battery production line, the plurality of devices 11 may include: a battery production device, a battery assembling device, a battery testing device, and the like. Specifically, for the battery production device, it can be used to complete a process of preparing a certain component in the battery. For the battery assembling device, it can be used to complete matching installation between a certain component in the battery and other components. For the battery testing device, it can be used to detect a certain performance of the battery.

Optionally, in the embodiment shown in Fig. 1, material transfer can be realized directly between some devices 11, and a conveying mechanism 12 is arranged between other devices 11 to realize material transfer. As an example, the conveying mechanism 12 includes, but is not limited to, a conveying roller, a conveying belt, and the like. The conveying mechanism 12 is capable of performing automatic transfer of materials between the plurality of devices 11 to realize automated production of the production line 10. The plurality of devices 11 and the conveying mechanism 12 as a whole may also be referred to as a main line body of the production line 10.

In order to realize automated production of the production line 10, in addition to the conveying mechanism 12, as shown in Fig. 1, in the embodiment of the present application, the production line 10 further includes: a controller 13 connected to the conveying mechanism 12 and the plurality of devices 11 to control the operation of the conveying mechanism 12 and the plurality of devices 11.

As an example and not a limitation, the controller 13 may be a Programmable Logic Controller (PLC).

In the embodiment shown in Fig. 1, the device 11 in the production line 10 is generally a large device, which is in a fixed position under normal circumstances. In order to facilitate the transportation of a material between two distant devices 11 in the production line 10, or to facilitate the transportation of a material in the production line 10 to another place, in the embodiment of the present application, the production line 10 may further include: a transportation apparatus 14. The transportation apparatus 14 is capable of reaching any position on the line body of the production line 10 to realize the transportation of the material on the line body.

Optionally, as shown in Fig. 1, in order that the transportation apparatus 14 is capable of smoothly receiving the material on the production line 10, a section of conveying mechanism 12 can be independently arranged on the production line 10, and the transportation apparatus 14 is capable of moving to an exit of the independent conveying mechanism 12, and the material on the production line 10 can be transported to the transportation apparatus 14 through the section of independent conveying mechanism 12.

Optionally, the transportation apparatus 14 may be an electrically driven apparatus, or may also be a human driven apparatus.

As an example, when a faulty part appears on the line body of the production line 10, the faulty part is conveyed to the transportation apparatus 14 through the independent conveying mechanism 12. The transportation apparatus 14 can transport the faulty part outside the line body to facilitate maintenance or analysis by personnel. Similarly, after the repair of the faulty part is completed, the transportation apparatus 14 can re-transport the repaired part to the line body so that the part can continue to flow on the production line 10.

It should be noted that Fig. 1 is only a simple illustration, illustrating a basic structure of a production line 10 to which the present application can be applied. In actual production applications, the production line 10 may further include more types and functions of devices or components, and the specific structure of the production line 10 is not limited in the embodiment of the present application.

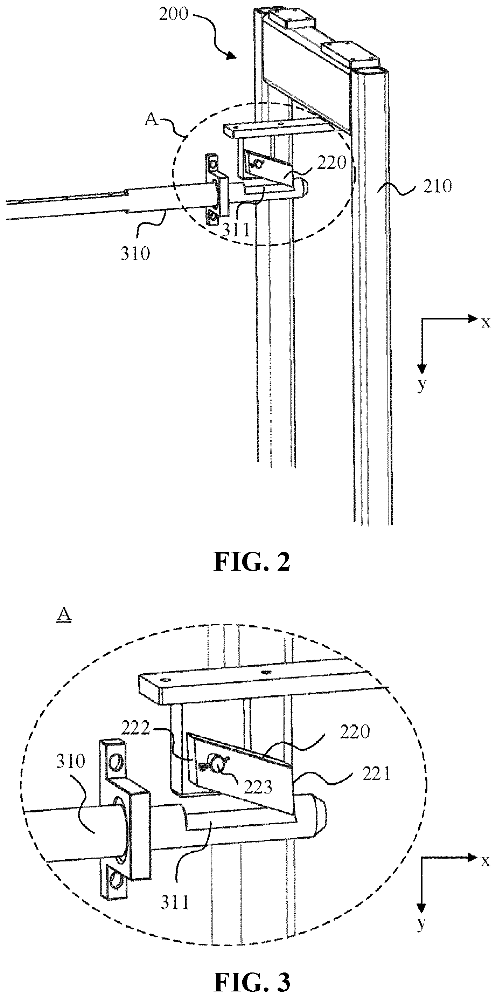

Fig. 2 shows a schematic structural diagram of a positioning apparatus 200 for a mobile apparatus provided in an embodiment of the present application. Fig. 3 shows a partial schematic enlarged diagram of a part A in Fig. 2. The positioning apparatus 200 is used for fixing a mobile apparatus 300 at a preset place non-manually. Optionally, the preset place includes but is not limited to the preset place in the production line 10 shown in Fig. 1 above.

As shown in Fig. 2 and Fig. 3, the positioning apparatus 200 includes a locking rod 310 arranged on the mobile apparatus 300 (not shown in the drawing). The locking rod 310 is provided with an accommodating region 311. The positioning apparatus 200 further includes a bracket 210 and a locking block 220. The bracket 210 is arranged at the preset place. The locking block 220 is arranged on the bracket 210 and has a first end 221 that is capable of moving vertically in a gravity direction y. The locking block 220 is configured such that when the mobile apparatus 300 moves toward the bracket 210 in a horizontal direction x, the locking rod 310 on the mobile apparatus 300 pushes the first end 221 of the locking block 220 to move upward, and when the locking rod 310 moves to a preset position, the first end 221 of the locking block 220 falls into the accommodating region 311 of the locking rod 310 under the action of gravity, so as to lock the locking rod 310.

As an example, referring to Fig. 2, the bracket 210 in the positioning apparatus 200 is a door frame structure, which has preferable stability and supporting performance. Of course, in addition to the door frame structure, the bracket 210 may also be of other structures, which is intended to have a certain degree of mechanical stability and be capable of being used for carrying the locking block 220. The specific form of the bracket 210 is not limited in the embodiment of the present application.

The locking block 220 is a block-shaped structure having the first end 221 that is capable of moving vertically in the gravity direction y. The first end 221 of the locking block 220 is capable of moving vertically, and therefore, the movement of the mobile apparatus 300 in the horizontal direction x can be used to push the first end 221 of the locking block 220 to move upward.

Specifically, in the embodiment shown in Fig. 2 and Fig. 3, the locking rod 310 is fixed in the mobile apparatus 300 and is capable of moving in the horizontal direction x along with the mobile apparatus 300. Optionally, as shown in Fig. 2 and Fig. 3, an axial direction of the locking rod 310 is parallel to the horizontal direction x. When the mobile apparatus 300 moves toward the bracket 210 in the horizontal direction x, one end of the locking rod 310 in the axial direction is used for pushing the first end 221 of the locking block 220 to move upward.

Referring to Fig. 3, in the embodiment of the present application, an accommodating region 311 is formed in the locking rod 310. In a process of the locking rod 310 moving in the horizontal direction x, the accommodating region 311 faces upward. When the mobile apparatus 300 reaches the preset position, an end portion of the locking rod 310 passes over the locking block 220, and the first end 221 of the locking block 220 falls into the accommodating region 311 of the locking rod 310 under the action of gravity.

Alternatively, the accommodating region 311 may be a recess in the locking rod 310. As an example, in Fig. 3, the accommodating region 311 is a groove formed in the locking rod 310.

Optionally, the shape of the locking block 220 may be a regular shape, such as a quadrilateral flat block structure shown in Fig. 2 and Fig. 3. Alternatively, in other embodiments, the shape of the locking block 220 may also be an irregular shape.

When the first end 221 of the locking block 220 falls into the accommodating region 311, a wall of one side of the accommodating region 311 facing the bracket 210 and the first end 221 of the locking block 220 may abut against each other to prevent the mobile apparatus 300 where the locking rod 310 is located from moving in a direction away from the bracket 210, thereby realizing locking and positioning of the mobile apparatus 300 on the bracket 210.

Through the technical solutions of the embodiments of the present application, the structure of the positioning apparatus 200 is relatively simple, and the movement of the mobile apparatus 300 and the effect of gravity can be used to achieve reliable locking and positioning of the mobile apparatus 300. While the positioning apparatus 200 has high positioning reliability, its manufacturing cost and installation and maintenance cost are both low.

Still referring to Fig. 3, optionally, in a possible embodiment of the present application, the locking block 220 is an eccentric structure. An eccentric hole (not shown in Fig. 3) is arranged in a region where a second end 222 of the locking block 220 is located. An eccentric shaft 223 is arranged in the eccentric hole. The region where the second end 222 of the locking block 220 is located is connected to the bracket 210 through the eccentric shaft 223, wherein the second end 222 of the locking block 220 is the other end opposite to the first end 221 of the locking block 220.

In the embodiment, the locking block 220 is designed as the eccentric structure. The locking block 220 is provided with the eccentric hole deviated from the center of gravity of the locking block 220, and the eccentric hole is formed close to the second end 222 of the locking block 220. Therefore, the eccentric hole may also be understood as being located in a region where the second end 222 of the locking block 220 is located.

The eccentric shaft 223 passes through the eccentric hole in the eccentric structure to connect the region where the second end 222 of the locking block 220 is located to the bracket 210. At the same time, the first end 221 of the locking block 220 opposite to the second end 222 may be a movable end, and the first end 221 may rotate around the eccentric shaft 223.

Through the technical solution of the embodiment, the locking block 220 is designed as the eccentric structure, so that the locking block 220 has the first end 221 capable of moving flexibly. Therefore, the first end 221 is capable of being sensitively pushed by the locking rod 310 in the mobile apparatus 300, thereby improving the operating sensitivity of the positioning apparatus 200.

Optionally, as shown in Fig. 2 and Fig. 3, the region where the second end 222 of the locking block 220 is located may be indirectly connected to the bracket 210. For example, the top of the bracket 210 is provided with a beam extending toward the mobile apparatus 300 in the horizontal direction x. A single fixing plate is connected to the lower part of the beam, and the locking block 220 is connected to the fixing plate through the eccentric shaft 223 to be indirectly connected to the bracket 210.

Of course, as another alternative embodiment, the locking block 220 may also be directly connected to the bracket 210 through a connecting member, or the locking block 220 may also be indirectly connected to the bracket 210 through other types of structural members.

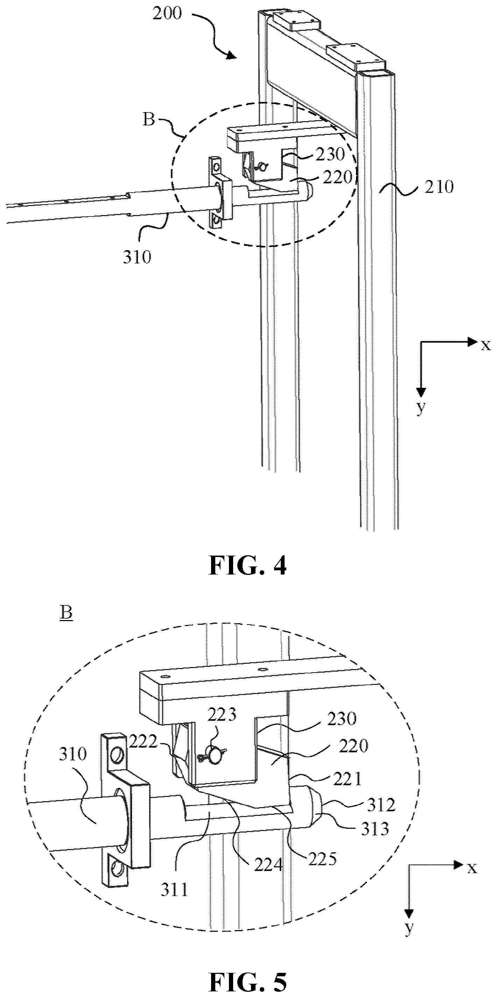

Fig. 4 shows a schematic structural diagram of a positioning apparatus 200 provided in another embodiment of the present application. Fig. 5 shows a partial schematic enlarged diagram of a part B in Fig. 4.

As shown in Fig. 4 and Fig. 5, in the embodiment of the present application, the positioning apparatus 200 further includes: a fixing groove 230, the fixing groove 230 is fixed to one side of the bracket 210 facing the mobile apparatus 300, and the region where the second end 222 of the locking block 220 is located is located in the fixing groove and is connected to the fixing groove 230 through the eccentric shaft 223.

Similar to the embodiment shown in Fig. 2 and Fig. 3 above, optionally, in the embodiment of the present application, as shown in Fig. 4 and Fig. 5, the top of the bracket 210 is provided with a beam extending in the horizontal direction x toward the mobile apparatus 300, two parallel fixing plates are connected to a lower part of the beam, and a fixing groove 230 may be formed between the two fixing plates. In other words, the two fixing plates may be understood as the two walls of the fixing groove 230.

The fixing groove 230 is capable of being used for accommodating at least a partial region of the locking block 220. Specifically, the fixing groove 230 is capable of accommodating the region where the second end 222 of the locking block 220 is located. While the region where the second end 222 of the locking block 220 is located is connected to the fixing groove 230 through the eccentric shaft 223, a wall of the fixing groove 230 can protect and limit the locking block 220 to prevent external factors from affecting the locking block 220 and prevent the locking block 220 from being displaced, thereby improving the use reliability of the locking block 220.

Optionally, referring to Fig. 5, in some possible embodiments, the locking block 220 has a first surface 224 facing the locking rod 310 between the second end 222 and the first end 221 of the locking block 220, the first surface 224 is a plane, and the locking block 220 is configured such that when the locking rod 310 moves in a horizontal direction x toward the bracket 210, the first surface 224 is in sliding contact with the locking rod 310.

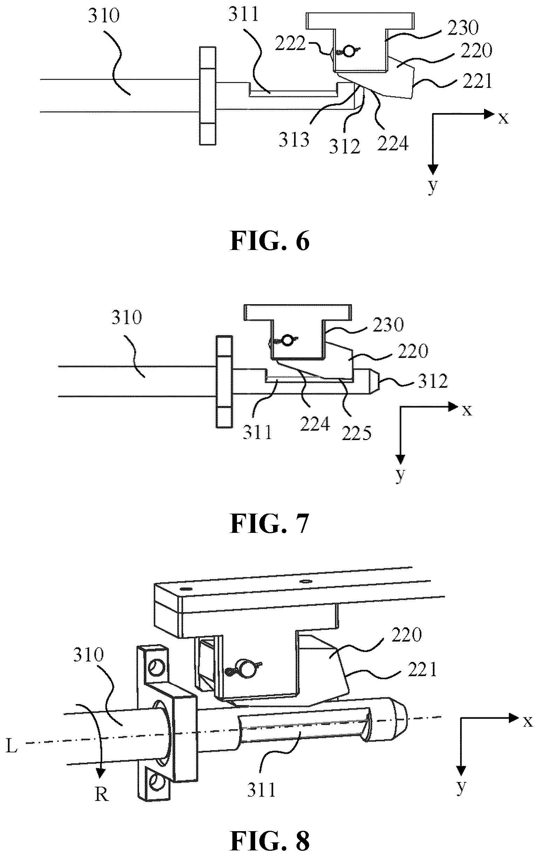

For ease of understanding, Fig. 6 shows a schematic diagram of the locking rod 310 in sliding contact with the first surface 224 of the locking block 220 in an embodiment of the present application.

As shown in Fig. 6, when the locking rod 310 moves in the horizontal direction x along with the mobile apparatus 300, the end portion of the locking rod 310 slides smoothly along the first surface 224 of the locking block 220, and gradually approaches the first end 221 of the locking block 220 from the second end 222 of the locking block 220. As the locking rod 310 gradually approaches the first end 221, the locking rod 310 is capable of gradually supporting the first end 221, thereby smoothly pushing the first end 221 to rise upward.

Through the technical solution of the embodiment, the first surface 224 of the locking block 220 is designed to be adapted to the locking rod 310, so that the first end 221 of the locking block 220 is capable of being smoothly pushed by the locking rod 310, thereby achieving the locking effect to ensure the use reliability of the positioning apparatus 200 and improve the user experience.

Optionally, as shown in Fig. 5 and Fig. 6, the locking rod 310 has a first end 312 in an axial direction, and the first end 312 is provided with a slope 313. The locking rod 310 is configured such that when moving toward the bracket 210 in the horizontal direction x, the slope 313 on the first end 312 of the locking rod 310 is in contact with the locking block 220, so as to push the first end 221 of the locking block 220 to move upward in the gravity direction y.

Through the technical solution of the embodiment, the first end 312 of the locking rod 310 is provided with the slope 313 to contact with the locking block 220. On the one hand, it can avoid sharp edges and corners in the locking rod 310 from causing damage to the locking block 220, and improve the use life of the positioning apparatus 200, and on the other hand, it can also increase the area between the locking rod 310 and the locking block 220 so that the locking rod 310 is capable of effectively pushing the locking block 220.

Specifically, in the embodiment of the present application, when the locking rod 310 moves in the horizontal direction x along with the mobile apparatus 300, the first end 312 of the locking rod 310 slides gradually approaches the first end 221 of the locking block 220 from the second end 222 of the locking block 220. When the locking rod 310 reaches a preset position, the first end 312 of the locking rod 310 passes over the first end 221 of the locking block 220, and the first end 221 of the locking block 220 is not supported by the locking rod 310 and thus falls into the accommodating region 311 of the locking rod 310 under the action of gravity.

Optionally, in some possible embodiments, the accommodating region 311 of the locking rod 310 is arranged at an end of the locking rod 310 close to the bracket 210. For example, the accommodating region 311 of the locking rod 310 may be arranged close to the first end 312 of the locking rod 310. In this manner, the end portion of the locking rod 310 close to the bracket 210 may be fully utilized to achieve the purpose of pushing the locking block 220 and accommodating the first end 221 of the locking block 220. In this manner, the horizontal space required by the entire positioning apparatus 200 may also be reduced.

For ease of comparison with Fig. 6, Fig. 7 shows a schematic diagram of the locking block 220 falling into the accommodating region 311 of the locking rod 310 after the locking rod 310 reaches the preset position in an embodiment of the present application.

Optionally, referring to Fig. 5 and Fig. 7, in some possible embodiments of the present application, the region where the first end 221 of the locking block 220 is located has a second surface 225 connected to the first surface 224, the second surface 225 is a plane, and the second surface 225 and the first surface 224 form an included angle. The locking block 220 is configured such that when the locking rod 310 moves to the preset position, the second surface 225 is closer to the accommodating region 311 than the first surface 224 in the gravity direction y.

Optionally, in some embodiments, when the locking rod 310 moves to the preset position, the second surface 225 contacts with a bottom surface of the accommodating region 311 of the locking rod 310.

In the embodiment of the present application, the second surface 225 facing the locking rod 310 is formed in the region where the first end 221 of the locking block 220 is located. The second surface 225 is connected to the first surface 224, and the included angle between the two may be an obtuse angle. In the embodiment, during the movement of the locking rod 310, its first end 312 can smoothly transition from the first surface 224 to the second surface 225.

More importantly, after the first end 221 of the locking block 220 falls into the accommodating region 311 of the locking rod 310, the second surface 225 may contact with the bottom surface of the accommodating region 311 to increase the contact area between the locking block 220 and the locking rod 310, thereby increasing the locking reliability of the locking block 220 on the locking rod 310 and improving the locking performance of the positioning apparatus 200.

Fig. 8 shows a schematic partial structural diagram of a positioning apparatus 200 for a mobile apparatus provided in an embodiment of the present application.

As shown in Fig. 8, the locking rod 310 is configured to rotate around a central axis L of the locking rod 310, and the accommodating region 311 is formed with an opening in the rotation direction R of the locking rod 310; the locking block 220 is configured such that when the locking rod 310 rotates, the first end 221 of the locking block 220 is moved out of the accommodating region 311 through the opening to unlock the locking rod 310.

Specifically, in the embodiment of the present application, the first end 221 of the locking block 220 can be moved out of the accommodating region 311 of the locking rod 310 by rotating the locking rod 310, thereby realizing unlocking between the locking rod 310 and the locking block 220. Therefore, the unlocking method is relatively simple and easy to implement, and does not bring too much additional cost to the positioning apparatus 200.

As shown in Fig. 5 and Fig. 8, before the locking rod 310 is rotated, the accommodating region 311 of the locking rod 310 has three openings. The upper opening faces the locking block 220 to facilitate the locking block 220 to fall into the accommodating region 311 through the opening. When the locking rod 310 rotates, the left or right opening may be used for the locking block 220 to pass through, so that the first end 221 of the locking block 220 is moved out of the accommodating region 311 through the opening.

Optionally, in some embodiments, the locking rod 310 may be rotated by manually applying an external force. Alternatively, in other embodiments, electric control may also be used to cause the locking rod 310 to rotate. Of course, as other alternative embodiments, other methods in the related art may also be used to drive the locking rod 310 to rotate, which is not specifically limited in the embodiment of the present application.

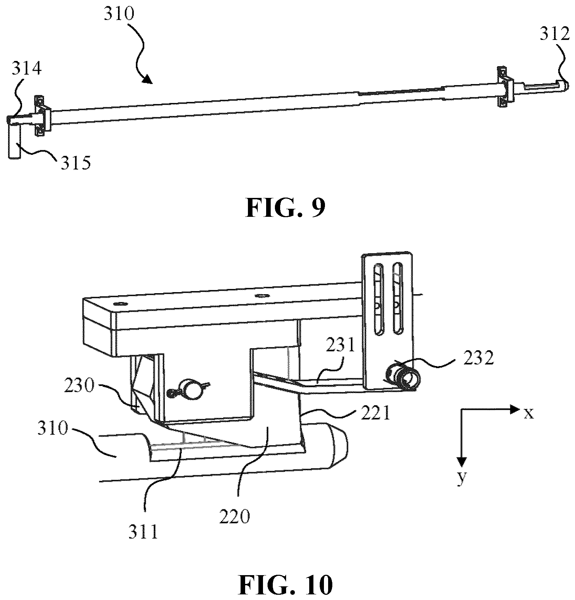

Fig. 9 shows a schematic structural diagram of a locking rod 310 provided in an embodiment of the present application.

As shown in Fig. 9, a second end 314 of the locking rod 310 in the axial direction is provided with a handle 315, and the locking rod 310 may be rotated by manually rotating the handle 315.

The second end 314 of the locking rod 310 is the end far away from the positioning apparatus 200. The handle 315 is arranged at the second end 314 of the locking rod 310. On the one hand, it is convenient for the user to operate the handle 315. On the other hand, the handle 315 will not affect the pushing and locking functions of the first end 312 of the locking rod 310 for the locking block 220.

Optionally, based on the positioning apparatus 200 in any of the above embodiments, the positioning apparatus 200 may further include: an operating apparatus, and the operating apparatus is arranged on the bracket 210 and configured to perform a preset operation on the mobile apparatus 300 according to a positional relationship between the locking rod 310 and the locking block 220.

As a possible application scenario, the positioning apparatus 200 may be arranged on the production line 10 shown in Fig. 1 above. Specifically, the bracket 210 in the positioning apparatus 200 is arranged at a preset place on the production line 10, and through the relevant cooperation between the locking block 220 and the locking rod 310, the mobile apparatus 300 is capable of being fixed at the preset place. In addition, the operating apparatus is capable of performing non-manual preset operations on the mobile apparatus 300 according to the positional relationship between the locking rod 310 and the locking block 220.

Fig. 10 shows a schematic partial structural diagram of a positioning apparatus 200 according to another embodiment of the present application.

As shown in Fig. 10, in the embodiment of the present application, the positioning apparatus 200 further includes: a sensing member 231 and a sensor 232. The sensing member 231 is connected to the locking block 220, and the sensing member 231 is capable of moving along with the locking block 220. The sensor 232 is arranged on the operating apparatus, and the sensor 232 is configured to sense the above sensing member 231 reaching a preset position to determine that the first end 221 of the locking block 220 falls into the accommodating region 311 of the locking rod 310, so that the operating apparatus performs a preset operation on the mobile apparatus 300.

Specifically, through the technical solution of the embodiment of the present application, the sensing member 231 and the sensor 232 are arranged in the positioning apparatus 200. The cooperation of the sensing member 231 and the sensor 232 is capable of implementing monitoring on a locking state of the mobile apparatus 300, and after the sensor 231 determines that the locking block 220 falls into the accommodating region 311 of the locking rod 310, the mobile apparatus 300 is locked to the positioning apparatus 200. At this time, the operating apparatus performs the preset operation on the mobile apparatus 300 to ensure the smooth progress of the preset operation.

Optionally, in the embodiment shown in Fig. 10, the sensing member 231 is a plate-shaped structure, and the sensing member 231 is connected to an upper region of the first end 221 of the locking block 220. In the embodiment, on the one hand, the sensing member 231 is capable of moving vertically along with the first end 221 of the locking block 220, thereby facilitating the sensor 232 to detect the position of the sensing member 231; on the other hand, the sensing member 231 will not affect the locking between a lower region of the first end 221 of the locking block 220 and the locking rod 310.

Optionally, in the embodiment of the present application, the sensor 232 can be indirectly and fixedly connected to the bracket 210. For example, the top of the bracket 210 is provided with a beam extending toward the mobile apparatus 300 in the horizontal direction x. The beam not only can be connected to the fixing groove 230 for accommodating the locking block 220, but also can be connected to the sensor 232 in the embodiment of the present application. The sensor 232 is fixedly connected to the beam, thereby being fixedly connected to the bracket 210.

Of course, as other alternative embodiments, the sensor 232 may also be directly fixed to the bracket 210, or the sensor 232 may also be indirectly fixed to the bracket 210 through another type of structural member.

Specifically, in the embodiment of the present application, as the position of the sensing member 231 changes, the magnitude of the signal amount sensed by the sensor 232 is different. As an example, when the first end 221 of the locking block 220 falls into the accommodating region 311 of the locking rod 310, the signal amount sensed by the sensor 232 is the largest. At this time, the locking block 220 and the locking rod 310 have been locked with each other, that is, the positioning apparatus 200 and the mobile apparatus 300 are locked to each other. Further, the sensor 232 can send relevant information to the operating apparatus, so that the operating apparatus is capable of performing preset operation when the positioning apparatus 200 and the mobile apparatus 300 are locked to each other.

In some possible embodiments, the above sensor 232 is electrically connected to the operating apparatus. When the sensor 232 senses that the sensing member 231 has arrived at a preset region, the operating apparatus is configured to: convey the material at the preset place to the mobile apparatus 300, and/or convey the material at the mobile apparatus 300 to the preset place.

Through the technical solution of the embodiment, when the sensor 232 senses that the sensing member 231 has reached the preset region, the mobile apparatus 300 is locked and positioned in the preset place. The operating apparatus is capable of achieving material conveying between the preset place and the mobile apparatus 300, thereby achieving the automatic material conveying function.

As an example, if the positioning apparatus 200 is arranged in the production line 10 shown in Fig. 1 above, the operating apparatus in the positioning apparatus 200 may include the controller 13 and the conveying mechanism 12 shown in Fig. 1. The mobile apparatus 300 may be the transportation apparatus 14 shown in Fig. 1.

Specifically, after the positioning apparatus 200 locks the mobile apparatus 300 at the preset place on the production line 10, the controller 13 is capable of receiving relevant information sent by the sensor 232, and the relevant information is used for indicating that the mobile apparatus 300 has been locked at the preset place. Then, the controller 13 controls the conveying mechanism 12 to convey a material at the preset place to the mobile apparatus 300, and/or controls the conveying mechanism 12 to convey a material at the mobile apparatus 300 to the preset place.

In the application scenario, referring to Fig. 1, the preset place on the production line 10 may be an exit position of a certain section of the conveyor mechanism 12. The preset place may be designed and adjusted according to actual requirements, which is not specifically limited in the embodiments of the present application.

As an example, when the production line 10 is a battery production line, the material may be a faulty battery or a repaired battery in the battery production line. When the production line 10 detects a faulty battery, the mobile apparatus 300 moves to the preset place on the production line 10 and is locked and positioned by the positioning apparatus 200 at the preset place. The controller 13 on the production line 10 may control the conveying mechanism 12 to convey the faulty battery to the mobile apparatus 300, and the mobile apparatus 300 transports the faulty battery for maintenance and rework.

After the faulty battery has been repaired and reworked, the mobile apparatus 300 may carry the repaired battery and move to the preset place on the production line 10 again, and be locked by the positioning apparatus 200 at the preset place again. The controller 13 on the production line 10 may control the conveying mechanism 12 to convey the repaired battery from the mobile apparatus 300 to the preset place on the production line 10 so that the repaired battery can continue to be transported on the production line 10. Or, as an alternative embodiment, after the mobile apparatus 300 is locked by the positioning apparatus 200 at the preset place again, the repaired battery on the mobile apparatus 300 may be manually pushed back to the production line 10.

It is understandable that when a material needs to be transferred from the mobile apparatus 300 to the preset place of the production line 10, the conveying mechanism 12 may also be configured on the mobile apparatus 300 in addition to a line body of the production line 10. In other words, the mobile apparatus 300 may also be provided with a conveying mechanism 12. After the mobile apparatus 300 is locked on the positioning apparatus 200, the conveying mechanism 12 on the mobile apparatus 300 may dock with the conveying mechanism 12 on the line body of the production line 10.

In some possible embodiments, the bracket 210 in the positioning apparatus 200 is a door frame type bracket. Optionally, the locking block 220 is arranged on a top region of the door frame type bracket.

Through the technical solution of the embodiment, the bracket 210 is designed as a door frame structure, which is capable of facilitating the fixed installation of the bracket 210 in the production line 10 shown in Fig. 1 and has high stability. In addition, the locking block 220 is arranged on the top region of the door frame type bracket, and there is enough space below the locking block 220 to arrange the locking rod 310 and the located mobile apparatus 300.

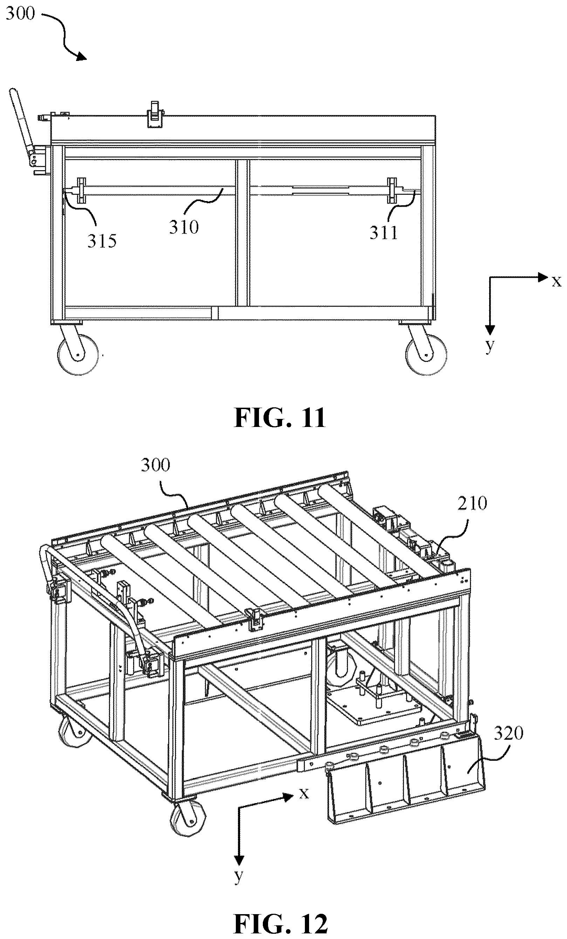

Fig. 11 shows a schematic structural diagram of a mobile apparatus 300 according to an embodiment of the present application.

As shown in Figure 11, the mobile apparatus 300 may be a transport vehicle. The transport vehicle is relatively simple to implement and is capable of move flexibly, thus being suitable for various scenarios.

Optionally, as shown in Fig. 11, the locking rod 310 may be fixedly arranged on an upper region of the transport vehicle.

Optionally, as shown in Fig. 11, the accommodating region 311 in the locking rod 310 is arranged close to the end portion of the locking rod 310. When the transport vehicle moves in the horizontal direction x, the end portion where the accommodating region 311 is located faces the bracket 210 in the positioning apparatus 200.

In addition, optionally, relative to the end of the locking rod 310 where the accommodating region 311 is located, the other end of the locking rod 310 is provided with a handle 315, and the locking rod 310 is configured to rotate the locking rod 310 by rotating the handle 315.

In some embodiments, the handle 315 may be located close to a handle of the transport vehicle, which may facilitate the user to rotate the handle 315 to unlock the locking rod 310 and the locking block 220.

Fig. 12 shows a schematic structural diagram of a mobile apparatus 300 and a bracket 210 according to another embodiment of another present application.

As shown in Fig. 12, the mobile apparatus 300 is a transport vehicle, and the transport vehicle further includes: a guide mechanism 320, and the guide mechanism 320 is used for guiding the transport vehicle to move toward the bracket 210 in the horizontal direction x.

Optionally, in the embodiment shown in Fig. 12, the guide mechanism 320 includes plate-like structures arranged on both sides of the transport vehicle, which can form a moving channel for the transport vehicle, so that the transport vehicle is capable of approaching and reaching the bracket 210 in the positioning apparatus 200 more accurately, thereby implementing locking of the locking block 220 on the bracket 210 to the locking rod 310 on the mobile apparatus 300.

The present application further provides a battery production line, including the positioning apparatus 200 in any one of the foregoing embodiments.

Optionally, the relevant structure of the battery production line may be obtained with reference to the production line 10 shown in Fig. 1 and the technical solutions of related embodiments, and will not be described again here.

The positioning apparatus 200 may be arranged at a preset place on the battery production line to realize non-manual locking and positioning of the mobile apparatus 300 at the preset place on the battery production line.

## Claims

1. A positioning apparatus (200) for a mobile apparatus, used for non-manually fixing the mobile apparatus (300) at a preset place, the positioning apparatus (200) comprising:
a locking rod (310) arrangeable on the mobile apparatus (300), the locking rod (310) being provided with an accommodating region (311);
a bracket (210) arrangeable at the preset place; and
a locking block (220) arranged on the bracket (210) and having a first end (221) that is capable of moving vertically in a gravity direction (y); wherein the locking block (220) is configured to: when the mobile apparatus (300) moves toward the bracket (210) in a horizontal direction (x), the first end (221) of the locking block (220) is pushed by the locking rod (310) to move upward, and when the locking rod (310) moves to a preset position, the first end (221) of the locking block (220) falls into the accommodating region (311) of the locking rod (310) under the action of gravity to lock the locking rod (310);
and **characterised in that**,
the locking block (220) is an eccentric structure, and an eccentric hole is formed in a region where a second end (222) of the locking block (220) is located, an eccentric shaft (223) is arranged in the eccentric hole, and the region where the second end (222) of the locking block (220) is located is connected to the bracket (210) through the eccentric shaft (223), wherein the second end (222) of the locking block (220) is the other end opposite to the first end (221) of the locking block (220).

2. The positioning apparatus (200) according to claim 1, wherein the positioning apparatus (200) further comprises: a fixing groove (230), the fixing groove (230) being arranged on one side of the bracket (210) facing the mobile apparatus (300); and
the locking block (220) is arranged on the fixing groove (230) and is connected to the bracket (210) through the fixing groove (230); and the region where the second end (222) of the locking block (220) is located is located in the fixing groove (230), and is connected to the fixing groove (230) through the eccentric shaft (223).

3. The positioning apparatus (200) according to claim 1 or 2, wherein the locking block (220) has a first surface (224) facing the locking rod (310) between the second end (222) and the first end (221) of the locking block (220), the first surface (224) being a plane; and
the locking block (220) is configured such that when the locking rod (310) moves toward the bracket (210) in the horizontal direction (x), the first surface (224) is in sliding contact with the locking rod (310).

4. The positioning apparatus (200) according to claim 3, wherein a region where the first end (221) of the locking block (220) is located has a second surface (225) connected to the first surface (224), the second surface (225) is a plane, and the second surface (225) and the first surface (224) form an included angle; and
the locking block (220) is configured such that when the locking rod (310) moves to the preset position, the second surface (225) is closer to the accommodating region (311) than the first surface (224) in the gravity direction (y).

5. The positioning apparatus (200) according to any one of claims 1 to 4, wherein the locking rod (310) has a first end (312) in an axial direction, and the first end (312) of the locking rod (310) is provided with a slope (313); and
the locking rod (310) is configured such that when moving toward the bracket (210) in the horizontal direction (x), the slope (313) on the first end (312) of the locking rod (310) is in contact with the locking block (220), so as to push the first end (221) of the locking block (220) to move upward in the gravity direction (y).

6. The positioning apparatus (200) according to any one of claims 1 to 5, wherein the accommodating region (311) is arranged at one end of the locking rod (310) close to the bracket (210).

7. The positioning apparatus (200) according to any one of claims 1 to 6, wherein the locking rod (310) is configured to rotate around a central axis (L) of the locking rod (310), and the accommodating region (311) is formed with an opening in the rotation direction (R) of the locking rod (310); and
the locking block (220) is configured such that when the locking rod (310) rotates, the first end (221) of the locking block (220) is moved out of the accommodating region (311) through the opening, so as to unlock the locking rod (310).

8. The positioning apparatus (200) according to any one of claims 1 to 7, wherein the bracket (210) is a door frame type bracket.

9. A battery production line, comprising the positioning apparatus (200) for a mobile apparatus according to any one of claims 1 to 8.

## Patentansprüche

1. Positionierungsvorrichtung (200) für eine bewegliche Vorrichtung, die zum nicht manuellen Arretieren der beweglichen Vorrichtung (300) an einem vorgegebenen Ort verwendet wird, wobei die Positionierungsvorrichtung (200) Folgendes umfasst:
einen Verriegelungsstab (310), der auf der beweglichen Vorrichtung (300) angeordnet werden kann, wobei der Verriegelungsstab (310) mit einem Aufnahmebereich (311) versehen ist;
eine Halterung (210), die an dem vorgegebenen Ort angeordnet werden kann; und
einen Verriegelungsblock (220), der an der Halterung (210) angeordnet ist und ein erstes Ende (221) aufweist, das sich in einer Schwerkraftrichtung (y) vertikal bewegen kann; wobei der Verriegelungsblock (220) wie folgt konfiguriert ist: dann, wenn sich die bewegliche Vorrichtung (300) in einer horizontalen Richtung (x) zur Halterung (210) bewegt, wird das erste Ende (221) des Verriegelungsblocks (220) durch den Verrieglungsstab (310) geschoben, derart, dass es sich nach oben bewegt, und dann, wenn sich der Verriegelungsstab (310) an eine vorgegebene Position bewegt, fällt das erste Ende (221) des Verriegelungsblocks (220) unter der Wirkung der Schwerkraft in den Aufnahmebereich (311) des Verriegelungsstabs (310), derart, dass der Verrieglungsstab (310) verriegelt wird;
und **dadurch gekennzeichnet, dass**
der Verriegelungsblock (220) eine exzentrische Struktur ist und ein exzentrisches Loch in einem Bereich gebildet ist, in dem ein zweites Ende (222) des Verriegelungsblocks (220) angeordnet ist, eine exzentrische Welle (223) in dem exzentrischen Loch angeordnet ist und der Bereich, in dem das zweite Ende (222) des Verriegelungsblocks (220) angeordnet ist, durch die exzentrische Welle (223) mit der Halterung (210) verbunden ist, wobei das zweite Ende (222) des Verriegelungsblocks (220) das andere Ende ist, das dem ersten Ende (221) des Verriegelungsblocks (220) gegenüberliegt.

2. Positionierungsvorrichtung (200) nach Anspruch 1, wobei die Positionierungsvorrichtung (200) ferner Folgendes umfasst: eine Arretierungsnut (230), wobei die Arretierungsnut (230) auf einer Seite der Halterung (210) angeordnet ist, die der beweglichen Vorrichtung (300) zugewandt ist; und
der Verriegelungsblock (220) auf der Arretierungsnut (230) angeordnet ist und durch die Arretierungsnut (230) mit der Halterung (210) verbunden ist; und der Bereich, in dem das zweite Ende (222) des Verriegelungsblocks (220) angeordnet ist, in der Arretierungsnut (230) angeordnet ist und durch die exzentrische Welle (223) mit der Arretierungsnut (230) verbunden ist.

3. Positionierungsvorrichtung (200) nach Anspruch 1 oder 2, wobei der Verriegelungsblock (220) eine erste Fläche (224), die dem Verriegelungsstab (310) zugewandt ist, zwischen dem zweiten Ende (222) und dem ersten Ende (221) des Verriegelungsblocks (220) aufweist, wobei die erste Fläche (224) eine Ebene ist; und
der Verriegelungsblock (220) derart konfiguriert ist, dass dann, wenn sich der Verriegelungsstab (310) in der horizontalen Richtung (x) zur Halterung (210) bewegt, die erste Fläche (224) sich mit dem Verriegelungsstab (310) in Gleitkontakt befindet.

4. Positionierungsvorrichtung (200) nach Anspruch 3, wobei ein Bereich, in dem das erste Ende (221) des Verriegelungsblocks (220) angeordnet ist, eine zweite Fläche (225) aufweist, die mit der ersten Fläche (224) verbunden ist, die zweite Fläche (225) eine Ebene ist und die zweite Fläche (225) und die erste Fläche (224) einen eingeschlossenen Winkel bilden; und
der Verriegelungsblock (220) derart konfiguriert ist, dass dann, wenn sich der Verriegelungsstab (310) an die vorgegebene Position bewegt, die zweite Fläche (225) sich in der Schwerkraftrichtung (y) näher als die erste Fläche (224) am Aufnahmebereich (311) befindet.

5. Positionierungsvorrichtung (200) nach einem der Ansprüche 1 bis 4, wobei der Verriegelungsstab (310) ein erstes Ende (312) in einer axialen Richtung aufweist und das erste Ende (312) des Verriegelungsstabs (310) mit einer Schräge (313) versehen ist; und
der Verriegelungsstab (310) derart konfiguriert ist, dass dann, wenn er sich in der horizontalen Richtung (x) zur Halterung (210) bewegt, die Schräge (313) auf dem ersten Ende (312) des Verriegelungsstabs (310) sich mit dem Verriegelungsblock (220) in Kontakt befindet, um das erste Ende (221) des Verriegelungsblocks (220) derart zu schieben, dass es sich in der Schwerkraftrichtung (y) nach oben bewegt.

6. Positionierungsvorrichtung (200) nach einem der Ansprüche 1 bis 5, wobei der Aufnahmebereich (311) an einem Ende des Verriegelungsstabs (310) nahe an der Halterung (210) angeordnet ist.

7. Positionierungsvorrichtung (200) nach einem der Ansprüche 1 bis 6, wobei der Verriegelungsstab (310) konfiguriert ist, sich um eine Mittelachse (L) des Verriegelungsstabs (310) zu drehen, und der Aufnahmebereich (311) in der Drehrichtung (R) des Verriegelungsstabs (310) mit einer Öffnung ausgebildet ist; und
der Verriegelungsblock (220) derart konfiguriert ist, dass dann, wenn sich der Verriegelungsstab (310) dreht, das erste Ende (221) des Verriegelungsblocks (220) durch die Öffnung aus dem Aufnahmebereich (311) bewegt wird, um den Verriegelungsstab (310) zu entriegeln.

8. Positionierungsvorrichtung (200) nach einem der Ansprüche 1 bis 7, wobei die Halterung (210) eine Halterung in der Art eines Türrahmens ist.

9. Batterieproduktionslinie, die die Positionierungsvorrichtung (200) für eine bewegliche Vorrichtung nach einem der Ansprüche 1 bis 8 umfasst.

## Revendications

1. Appareil de positionnement (200) pour un appareil mobile, utilisé pour fixer de manière non manuelle l'appareil mobile (300) à un emplacement prédéfini, l'appareil de positionnement (200) comprenant :
une tige de verrouillage (310) apte à être agencée sur l'appareil mobile (300), la tige de verrouillage (310) étant pourvue d'une zone d'accueil (311) ;
un support (210) apte à être agencé à l'emplacement prédéfini ; et
un bloc de verrouillage (220) agencé sur le support (210) et présentant une première extrémité (221) susceptible de se déplacer verticalement dans une direction de la gravité (y) ; le bloc de verrouillage (220) étant configuré pour faire en sorte que : lorsque l'appareil mobile (300) se déplace vers le support (210) dans une direction horizontale (x), la première extrémité (221) du bloc de verrouillage (220) est poussée par la tige de verrouillage (310) vers le haut et, lorsque la tige de verrouillage (310) atteint une position prédéfinie, la première extrémité (221) du bloc de verrouillage (220) retombe dans la zone d'accueil (311) de la tige de verrouillage (310) sous l'action de la gravité pour verrouiller la tige de verrouillage (310);
et **caractérisé en ce que**,
le bloc de verrouillage (220) est une structure excentrique, et un trou excentrique est ménagé dans une zone où est située une deuxième extrémité (222) du bloc de verrouillage (220), un arbre excentrique (223) est agencé dans le trou excentrique, et la zone où est située la deuxième extrémité (222) du bloc de verrouillage (220) est reliée au support (210) par le biais de l'arbre excentrique (223), la deuxième extrémité (222) du bloc de verrouillage (220) étant l'autre extrémité, opposée à la première extrémité (221), du bloc de verrouillage (220).

2. Appareil de positionnement (200) selon la revendication 1, l'appareil de positionnement (200) comprenant en outre : une rainure de fixation (230), la rainure de fixation (230) étant agencée sur un côté du support (210) faisant face à l'appareil mobile (300) ; et
le bloc de verrouillage (220) étant agencé sur la rainure de fixation (230) et étant relié au support (210) par le biais de la rainure de fixation (230) ; et la zone où est située la deuxième extrémité (222) du bloc de verrouillage (220) étant située dans la rainure de fixation (230), et étant reliée à la rainure de fixation (230) par le biais de l'arbre excentrique (223).

3. Appareil de positionnement (200) selon la revendication 1 ou 2, dans lequel le bloc de verrouillage (220) présente une première surface (224) en regard de la tige de verrouillage (310) entre la deuxième extrémité (222) et la première extrémité (221) du bloc de verrouillage (220), la première surface (224) étant une surface plane ; et
le bloc de verrouillage (220) est configuré de sorte que, lorsque la tige de verrouillage (310) se déplace vers le support (210) dans la direction horizontale (x), la première surface (224) est en contact glissant avec la tige de verrouillage (310).

4. Appareil de positionnement (200) selon la revendication 3, dans lequel une zone où est située la première extrémité (221) du bloc de verrouillage (220) présente une deuxième surface (225) reliée à la première surface (224), la deuxième surface (225) est une surface plane, et la deuxième surface (225) et la première surface (224) forment un angle inclus ; et
le bloc de verrouillage (220) est configuré de sorte que, lorsque la tige de verrouillage (310) atteint la position préétablie, la deuxième surface (225) est plus proche de la zone d'accueil (311) que la première surface (224) dans la direction de la gravité (y).

5. Appareil de positionnement (200) selon l'une quelconque des revendications 1 à 4, dans lequel la tige de verrouillage (310) présente une première extrémité (312) dans une direction axiale, et la première extrémité (312) de la tige de verrouillage (310) est pourvue d'une pente (313) ; et la tige de verrouillage (310) est configurée de sorte que, lorsqu'elle se déplace vers le support (210) dans la direction horizontale (x), la pente (313) sur la première extrémité (312) de la tige de verrouillage (310) est en contact avec le bloc de verrouillage (220), de manière à pousser la première extrémité (221) du bloc de verrouillage (220) vers le haut dans la direction de la gravité (y).

6. Appareil de positionnement (200) selon l'une quelconque des revendications 1 à 5, dans lequel la zone d'accueil (311) est agencée à une extrémité de la tige de verrouillage (310) proche du support (210).

7. Appareil de positionnement (200) selon l'une quelconque des revendications 1 à 6, dans lequel la tige de verrouillage (310) est configurée pour tourner autour d'un axe central (L) de la tige de verrouillage (310), et la zone d'accueil (311) présente une ouverture dans le sens de rotation (R) de la tige de verrouillage (310) ; et
le bloc de verrouillage (220) est configuré de sorte que, lorsque la tige de verrouillage (310) tourne, la première extrémité (221) du bloc de verrouillage (220) est déplacée hors de la zone d'accueil (311) à travers l'ouverture, de manière à déverrouiller la tige de verrouillage (310).

8. Appareil de positionnement (200) selon l'une quelconque des revendications 1 à 7, dans lequel le support (210) est un support de type cadre de porte.

9. Ligne de fabrication de batteries, comprenant l'appareil de positionnement (200) pour un appareil mobile selon l'une quelconque des revendications 1 à 8.
